# EUROPEAN PATENT APPLICATION

(11) **EP 4 231 699 A1**
(43) Date of publication of application: **23.08.2023**
(21) Application number: 20957698.2
(22) Date of filing: 15.10.2020
(51) Int. Cl.: H04W 24/10, H04W 72/04

(54) **TERMINAL, BASE STATION, AND COMMUNICATION METHOD**

(71) Applicant: NTT DOCOMO, INC., Tokyo 100-6150 (JP)
(72) Inventor: SHIBAIKE, Naoya, Tokyo 100-6150 (JP); HARADA, Hiroki, Tokyo 100-6150 (JP); NAGATA, Satoshi, Tokyo 100-6150 (JP); OKANO, Mayuko, Tokyo 100-6150 (JP); WANG, Jing, Beijing, 100190 (CN)
(74) Representative: Hoffmann Eitle
(86) International application number: PCT/JP2020/038982
(87) International publication number: WO 2022/079869

(57) **Abstract**

Provided is a terminal having a receiving unit that performs measurements at a layer 1 and a layer 3 with reference to one or more first symbols, and a controlling unit that assumes no data scheduling done for the first symbol, a second symbol continuous before the first symbol and a third symbol continuous after the first symbol, wherein a number of symbols of the second symbol is greater than or equal to 1 and a number of symbols of the third symbol is greater than or equal to 1.

## Description

### [TECHNICAL FIELD]

The present invention relates to a terminal, a base station and a communication method in a wireless communication system.

### [BACKGROUND]

In NR (New Radio) (also referred to as "5G"), which is a successor system to LTE (Long Term Evolution), technologies are being considered to satisfy requirements such as high-capacity systems, fast data transmission rates, low latency, simultaneous connection of a plurality of terminals, low cost, and lower power saving (e.g., Non-patent Reference 1) .

In NR release 17, it is considered to use a higher frequency band than the conventional release (e.g., Non-patent Reference 2) . For example, in a frequency band from 52.6 GHz to 71 GHz, applicable numerology including subcarrier spacing, channel bandwidth, etc., physical layer designing, obstacles assumed in actual wireless communications and the like are being considered.

### [Related Art]

### [Non-patent Reference]

[Non-Patent Reference 1] 3GPP TS 38.300 V16.2.0 (2020-07)
[Non-Patent Reference 2] 3GPP TS 38.306 V16.1.0 (2020-07)

### [SUMMARY]

### [Technical Problem]

When performing measurements in newly operated, higher frequency bands using higher frequencies than previous operations, it is assumed that symbols to be excluded from data scheduling may not be sufficient to be the same symbols as those being measured, for example, due to a beam switching time, or a shorter symbol length due to a larger subcarrier interval.

The present invention has been made in view of the above points, and scheduling adapted to a frequency band in a wireless communication system can be performed.

### [Solution to Problem]

According to the disclosed technology, provided is a terminal having a receiving unit that performs measurements at a layer 1 and a layer 3 with reference to one or more first symbols, and a controlling unit that assumes no data scheduling done between the first symbol, a second symbol continuous before the first symbol and a third symbol continuous after the first symbol, wherein a number of symbols of the second symbol is greater than or equal to 1 and a number of symbols of the third symbol is greater than or equal to 1.

### [Beneficial Effect of the Invention]

According to the disclosed technology, in a wireless communication system, scheduling adapted to a frequency band can be performed.

### [BRIEF DESCRIPTION OF THE DRAWINGS]

[FIG. 1] is a diagram showing an example of a configuration of a wireless communication system according to an embodiment of the present invention.
[FIG. 2] is a diagram showing an example of a frequency range according to an embodiment of the present invention.
[FIG. 3] is an example (1) of scheduling according to an embodiment of the present invention.
[FIG. 4] is an example (2) of scheduling according to an embodiment of the present invention.
[FIG. 5] is an example (3) of scheduling according to an embodiment of the present invention.
[FIG. 6] is a diagram showing an example of a functional configuration of a base station 10 according to an embodiment of the present invention.
[FIG. 7] is a diagram showing an example of a functional configuration of a terminal 20 according to an embodiment of the present invention.
[FIG. 8] is a diagram showing an example of a hardware configuration of a base station 10 or a terminal 20 according to an embodiment of the present invention.

### [DETAILED DESCRIPTION]

Embodiments of the present invention are described below with reference to the drawings. It should be noted that the embodiments described below are examples and the embodiments to which the present invention is applied are not limited to the following embodiments.

Prior arts are appropriately used in the operation of the wireless communication system according to an embodiment of the present invention. However, the existing technology is, for example, an existing LTE, but is not limited to the existing LTE. Further, the term "LTE" used herein should have a broad meaning including LTE-Advanced and techniques after LTE-Advanced (for example, NR) unless otherwise specified.

In addition, in the embodiments of the present invention described below, terms such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), and PUSCH (Physical Uplink Shared Channel) used in the existing LTE are used. This is for convenience of description, and these similar signals, functions and the like may be called by other names. Further, the above-mentioned terms in NR correspond to NR-SS, NR-PSS, NR-SSS, NR-PBCH, NR-PRACH and the like. However, a signal used for NR is not necessarily stated as "NR-".

Further, in the embodiments of the present invention, a duplex system may be a TDD (Time Division Duplex) system, an FDD (Frequency Division Duplex) system, or any other system (for example, Flexible Duplex system).

Further, in the embodiments of the present invention, "configuring" a wireless parameter and the like may mean "pre-configuring" a predetermined value or configuring a wireless parameter notified from a base station 10 or a terminal 20.

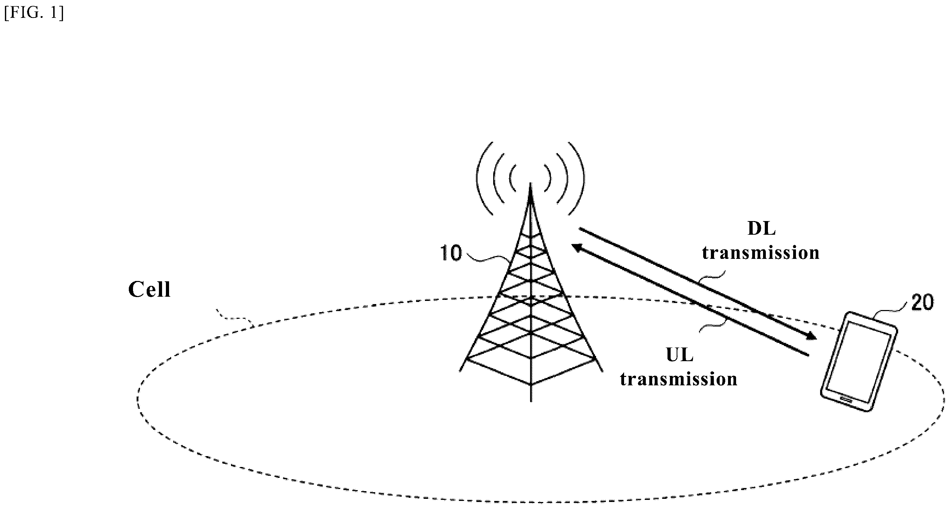

FIG. 1 is a diagram showing an example of a configuration of a wireless communication system according to an embodiment of the present invention. The wireless communication system according to an embodiment of the present invention comprises a base station 10 and a terminal 20 as shown in FIG. 1. FIG. 1 shows one base station 10 and one terminal 20, but this is just an example and there can be a plurality of each.

The base station 10 is a communication device that provides one or more cells and performs wireless communication with the terminal 20. Physical resources of a wireless signal are defined in a time domain and a frequency domain, wherein the time domain may be defined by a number of OFDM (Orthogonal Frequency Division Multiplexing) symbols, and the frequency domain may be defined by a number of subcarriers or a number of resource blocks. The base station 10 transmits a synchronization signal and system information to the terminal 20. The synchronization signal is, for example, NR-PSS and NR-SSS. The system information is transmitted by, for example, NR-PBCH, and is also referred to as communication information. The synchronization signal and the system information may be called SSB (SS/PBCH block). As shown in FIG. 1, the base station 10 transmits control signals or data to the terminal 20 by DL (Downlink) and receives a control signal or data from the terminal 20 by UL (Uplink). Both the base station 10 and the terminal 20 can transmit and receive signals by beam forming. Further, both the base station 10 and the terminal 20 can apply MIMO (Multiple Input Multiple Output) communication to DL or UL. Further, both the base station 10 and the terminal 20 may communicate via a secondary cell (SCell: Secondary Cell) and a primary cell (PCell: Primary Cell) by CA (Carrier Aggregation). Further, the terminal 20 may perform communication via a primary cell of the base station 10 by DC (Dual Connectivity) and a primary secondary cell group cell (PSCell: Primary SCG Cell) of another base station 10.

The terminal 20 is a communication device having a wireless communication function, such as a smart phone, a mobile phone, a tablet, a wearable terminal, and a communication module for M2M (Machine-to-Machine). As shown in FIG. 1, the terminal 20 receives control signals or data from the base station 10 by DL and transmits control signals or data to the base station 10 by UL, thereby using various types of communication services provided by the wireless communication system. Further, the terminal 20 receives various reference signals transmitted from the base station 10 and measures the propagation path quality based on the reception result of the reference signals.

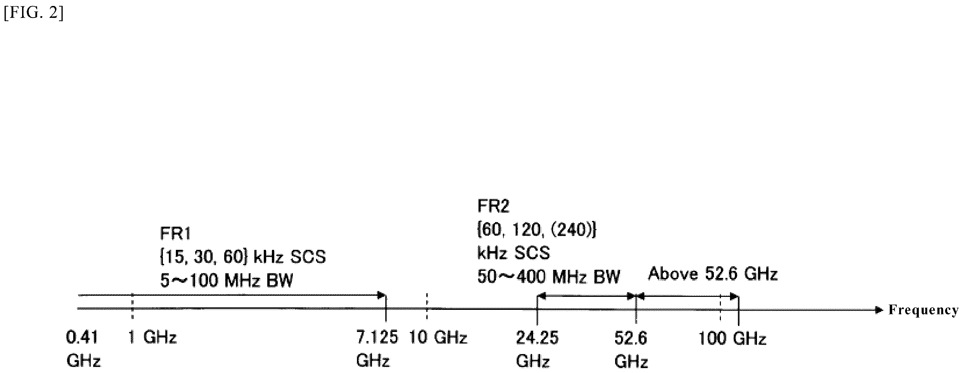

FIG. 2 is a diagram showing an example of a frequency range according to an embodiment of the present invention. In the NR specifications of 3GPP release 15 and release 16, it is considered to operate a frequency band of 52.6 GHz or higher, for example. As shown in FIG. 2, FR (Frequency range) 1, which currently defines the operation, is a frequency range from 410 MHz to 7.125 GHz, and SCS (Sub carrier spacing) is 15, 30 or 60 kHz with a bandwidth from 5 MHz to 100 MHz. FR2 is a frequency band from 24.25 GHz to 52.6 GHz, and SCS uses 60, 120 or 240 kHz with a bandwidth from 50 MHz to 400 MHz. For example, a newly operated frequency band may be assumed to be from 52.6 GHz to 114.25 GHz.

As described above, since the carrier frequency of the newly operated frequency band is much higher than that of the conventional one, the following problems 1)-3) are assumed, for example.

### 1) Large phase noise

For this problem, it is required to use a larger SCS or a single carrier waveform, for example.

### 2) Large propagation loss

For this problem, a narrower beam and a larger number of beams, for example, are required.

### 3) High sensitivity in PAPR (Peak to Average Power Ratio) and non-linearity of PA (Power amplifier)

For this problem, a larger SCS (that is, a smaller number of FFT points), a mechanism to reduce PAPR, and a single carrier waveform, for example, are required.

Considering the above problems, the waveform in the newly operated frequency band is assumed to be CP-OFDM (Cyclic Prefix Orthogonal Frequency Division Multiplexing) /DFT-S-OFDM (Discrete Fourier Transform Spread OFDM) to which a larger SCS is applied, for example.

On the other hand, as shown in Table 1, which shows a relationship between SCS and symbol lengths, when 14 symbols are maintained as a slot configuration, due to a larger SCS, a symbol/CP period and a slot period are shortened.

**[Table 1]**

| **SCS** | **15 kHz** | **30 kHz** | **60 kHz** | **120 kHz** | **240 kHz** | **480 kHz** | **960 kHz** |
|---|---|---|---|---|---|---|---|
| Symbol duration | 66.6 us | 33.3 us | 16.65 us | 8.325 us | 4.1625 us | 2.08125 us | 1.040625 us |

As shown in Table 1, if SCS is 15 kHz, the symbol duration is 66.6 microsecunds. If SCS is 30 kHz, the symbol duration is 33.3 microsecunds. If SCS is 60 kHz, the symbol duration is 16.65 microsecunds. If SCS is 120 kHz, the symbol duration is 8.325 microsecunds. If SCS is 240 kHz, the symbol duration is 4.1625 microseconds. If SCS is 480 kHz, the symbol duration is 2.08125 microseconds. If SCS is 960 kHz, the symbol duration is 1.040625 microseconds.

Further, RRM (Radio Resource Management) is a terminal operation in which the above problems should be taken into consideration. RRM performs RLM (Radio Link Monitoring) in a primary cell or a primary secondary cell group cell. In addition, RRM performs link recovery in the primary cell or the primary secondary cell group cell. Link recovery includes operations related to beam failure detection (BFD) and candidate beam detection (CBD). RRM also controls L3 measurement (Layer 3 measurement) and L1-RSRP measurement (Layer 1-RSRP measurement) in a serving cell. The "L3 measurement" may be NR intra frequency measurement and/or NR inter frequency measurement.

It is also necessary to determine an area where scheduling is possible in consideration of the above problems. In general, in order to monitor SSB for RRM, all DL reception and UL transmission on the same symbol as the monitored SSB are not assumed at the terminal. Further, in L3 measurement, in addition to the same symbol as the monitored SSB, one symbol before and one symbol after the monitored SSB are excluded from the scheduling target. The exclusion is performed considering a timing gap between cells for propagation delay and synchronization gap, for example.

It is assumed that symbols to be excluded from data scheduling in the newly operated frequency bands may not be sufficient if they are the same symbols as those to be monitored. Also, when excluding symbols other than the same symbols as those to be monitored, a number of excluded symbols is not clear. For example, it is not clear whether only one symbol before and after is sufficient. In addition, for example, it is necessary to consider a beam switching time, shorter OFDM symbol lengths due to larger SCS, and the like.

Therefore, as a scheduling limitation, it may be specified that each of a plurality of symbols before and after SSB or the referenced symbols should not be used for data scheduling during RLM, BFD, CBD or L1-RSRP measurement. This makes it possible to prevent, for example, a symbol that cannot be used due to the beam switching time from being used for scheduling.

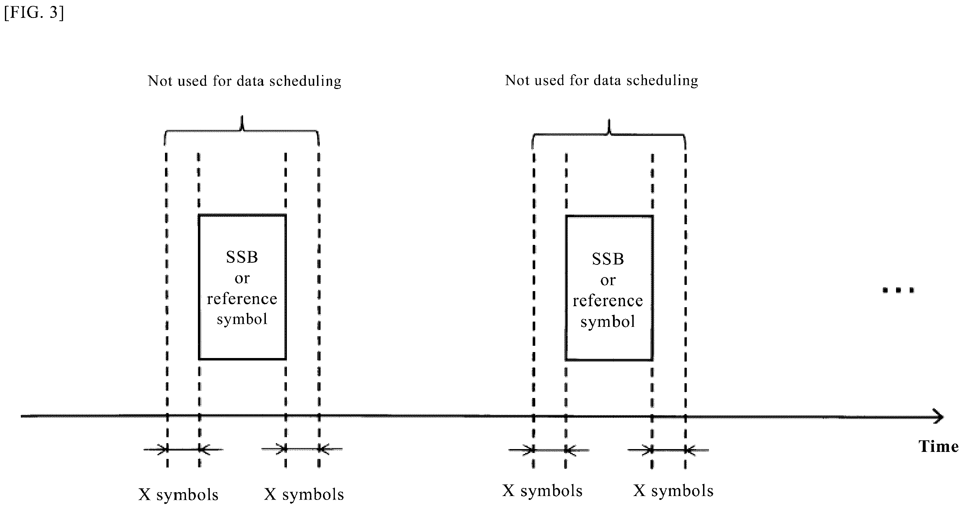

FIG. 3 is an example (1) of scheduling according to an embodiment of the present invention. As shown in FIG. 3, X symbol(s) before or X symbol(s) after each SSB or each reference symbol to be measured may not be used for UL transmission and DL reception, that is, for data scheduling. A value X may be configured, for example, based on FR. For example, different values of X may be configured in frequency bands of 52.6 GHz or higher, or in FR1 and FR2. The reference symbol may be SSB or a symbol in which various reference signals are arranged.

Hereinafter, the reference symbol may refer to either SSB or the reference signal. SSB or the reference signal may be arranged on one or more symbols, arranged on continuous symbols, or arranged on discontinuous symbols. If SSB or the reference signal is arranged on the discontinuous symbols, an outermost symbol in the time domain may define before and after the reference symbol. The reference symbol itself may not be used for data scheduling. Also, a number of symbols not used for data scheduling may not be the same between before the reference symbol and after the reference symbol. That is, the number of symbols that are not used for data scheduling may be configured independently before the reference symbol and after the reference symbol.

Further, for example, the value X may be determined based on SCS (for example, 480 kHz, 960 kHz, or even higher frequency) used for the reference signal to be measured. The value X may also be determined based on SCS used for data. The value X may also be determined based on both SCS used for the reference signal to be measured and SCS used for data. For example, if SCS of the reference signal and SCS of the data are different, the value X may be determined based on both SCSs.

Further, the value X may be one of RRC configurations. For example, the RRC configuration and the value X may be determined depending on the frequency band, SCS and/or the difference in SCS applied to the reference signal and the data. The value X may also be one of MAC-CE (Medium Access Control - Control Element) configurations. For example, the MAC-CE configuration and the value X may be determined depending on the frequency band and/or SCS. The value X may also be determined by notification of DCI (Downlink Control Information).

Further, the value X or a range of the value X may be determined based on UE capability signaling or SCS.

A plurality of different values X may be configured for different purposes. For example, the value X for securing a beam switching time may be configured, or the value X for securing a transmission/reception switching time may be configured. For example, providing X = Y + Z, Y may be a value for securing a beam switching time, and Z may be a value for securing a transmission/reception switching time. Y and Z may be configured based on different conditions, respectively. For example, Y may be configured based on SCS, while Z may be configured based on SCS and the data direction (i.e., UL or DL).

For example, a predetermined value (for example, 1, 2, etc.) may be configured to the value X for a frequency band above a certain frequency or FRx (FR1, FR2, FR3, etc.) and if different SCSs are used for the data and the reference signal to be measured, a condition for performing the configuration may be added.

Further, for example, a predetermined value (for example, 1, 2, etc.) may be configured to the value X when a predetermined SCS (for example, 240 kHz, 480 kHz, 960 kHz or higher SCS) is used, and a condition for performing the configuration may be added when different SCSs are used for the data and the reference signal to be measured.

Further, for example, a predetermined value (for example, 1, 2, etc.) may be configured to the value X by RRC signaling. The predetermined value may be determined based on frequency-related information (for example, carrier frequency, FR), determined based on SCS, or determined based on other conditions.

Further, for example, a predetermined value (for example, 1, 2, etc.) may be configured to the value X by MAC signaling. The predetermined value may be determined based on frequency-related information (for example, carrier frequency, FR), determined based on SCS, or determined based on other conditions.

Further, for example, a candidate set of values X may be specified or configured by RRC signaling. A predetermined value may be notified by DCI from the candidate set, a predetermined value may be configured by MAC-CE from the candidate set, or a predetermined value may be configured by RRC signaling from the candidate set.

A range of the value X or a candidate value may be determined depending on UE capability or determined depending on SCS. For example, a larger value X may be configured for a higher SCS.

A scheduling method during RLM, BFD, CBD or L1-RSRP measurement described with reference to FIG. 3 above is referred to below as Proposal 1.

As a scheduling limitation, it may be specified that each of a plurality of symbols before and after SSB or the referenced symbols should not be used for data scheduling during L3 measurement. This makes it possible to prevent, for example, a symbol that cannot be used due to the beam switching time from being used for scheduling.

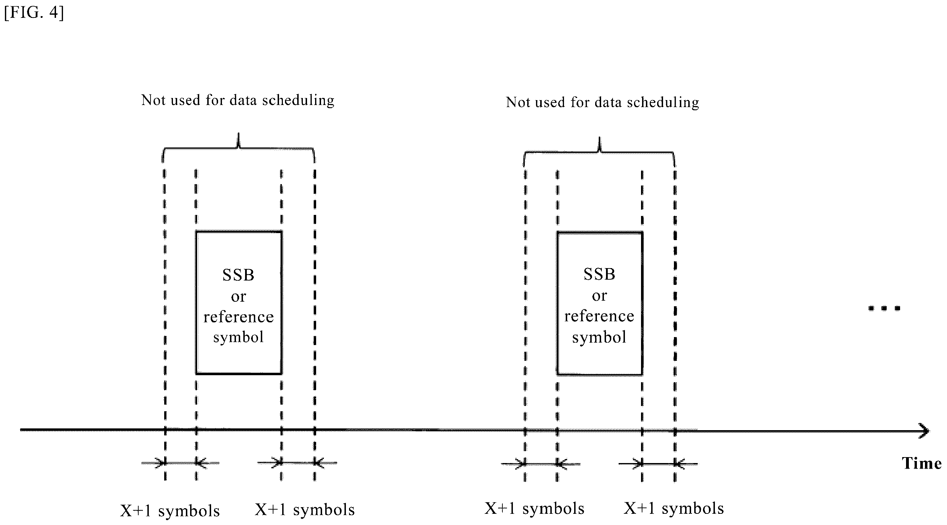

FIG. 4 is an example (2) of scheduling according to an embodiment of the present invention. As shown in FIG. 4, X+1 symbols before or X+1 symbols after each SSB or each reference symbol to be L3-measured may not be used for UL transmission and DL reception, that is, data scheduling. The value X may be determined or configured in the same manner as described with reference to FIG. 3 above. That is, there may be more symbols not used for data scheduling before and after SSB to be measured or the reference symbol to be measured during L3 measurement than during the measurement in Proposal 1. The reference symbol itself may not be used for data scheduling. Also, a number of symbols not used for data scheduling may not be the same before the reference symbol and after the reference symbol. That is, the number of symbols that are not used for data scheduling may be configured independently before the reference symbol and after the reference symbol.

For example, the value X may be determined or configured by RRC signaling, may be configured by MAC-CE, or may be notified by DCI. Further, the value X or a range of value X may be determined based on UE capacity signaling.

A plurality of different values X may be configured for different purposes. For example, the value X for securing a beam switching time may be configured, or the value X for securing a transmission/reception switching time may be configured. For example, providing X = Y + Z, Y may be a value for securing a beam switching time, and Z may be a value for securing a transmission/reception switching time.

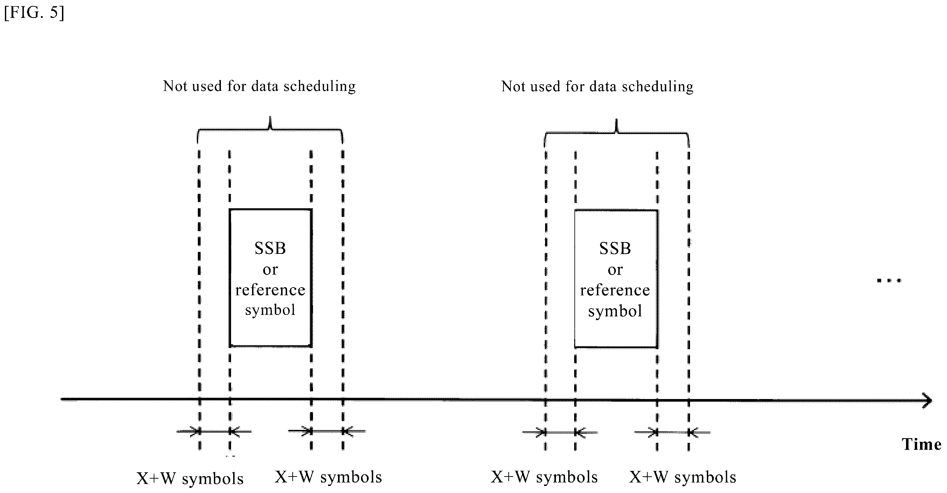

FIG. 5 is an example (3) of scheduling according to an embodiment of the present invention. As shown in FIG. 5, X+W symbols before or X+W symbols after each SSB or each reference symbol to be L3-measured may not be used for UL transmission and DL reception, that is, data scheduling. This makes it possible to prevent, for example, a symbol that cannot be used due to the beam switching time and a timing difference between the cells from being used for scheduling. The reference symbol itself may not be used for data scheduling. Also, a number of symbols not used for data scheduling may not be the same before the reference symbol and after the reference symbol. That is, the number of symbols that are not used for data scheduling may be configured independently before the reference symbol and after the reference symbol.

For example, the value X and the value W may be determined or configured by RRC signaling, may be configured by MAC-CE, or may be notified by DCI. Further, the value X, the value W, a range of the value X and a range of the value W may be determined based on UE capability signaling.

A plurality of different values X and a plurality of different values W may be configured for different purposes. For example, the value X for securing a beam switching time may be configured, or the value X for securing a transmission/reception switching time may be configured. For example, providing X = Y + Z, Y may be a value for securing a beam switching time, and Z may be a value for securing a transmission/reception switching time.

The value W may be determined based on one or more combinations of a timing difference between the serving cell and other cells where the reference signal to be monitored is located, SCS to be applied to the serving cell, SCS to be applied to other cells where the reference signal to be monitored is located, and FR to be operated.

The value X and the value W may be determined based on a different method. For example, the value X may be determined based on the UE capability, and the value W may be predetermined.

A scheduling method during L3 measurement described with reference to FIG. 4 and FIG. 5 above is referred to below as Proposal 2.

The scheduling methods according to Proposal 1 and Proposal 2 above may be configured, enabled, or disabled based on RRC signaling. For example, the scheduling methods according to Proposal 1 and Proposal 2 may be enabled or disabled based on predetermined RRC signaling.

Proposal 1 above may be applied to scheduling during L3 measurement. Proposal 2 above may be applied to scheduling during RLM, BFD, CBD or L1-RSRP measurement.

For carrier aggregation, Proposal 1 above and Proposal 2 above may be applied independently for each CC (Component Carrier) . That is, different scheduling methods may be applied to different CCs.

Further, for carrier aggregation, the scheduling methods according to Proposal 1 above and Proposal 2 above to be applied to a certain CC may be applied to all one or more serving cells. The certain CC may be a primary cell (PCell) or a primary secondary cell group cell (PSCell) in FR2, CC to which maximum SCS is applied, or CC to which the maximum value X above or value X + W is applied.

The scheduling method for the carrier aggregation above may be applied to intra-band carrier aggregation and inter-band carrier aggregation, or may be applied only to intra-band carrier aggregation.

According to the above embodiments, the base station 10 and the terminal 20 can flexibly set a symbol that is not used for data scheduling according to a frequency band, SCS and the like when measuring SSB or various reference signals.

Therefore, in a wireless communication system, scheduling adapted to a frequency band can be performed.

### (Device configuration)

Next, an example of a functional configuration of the base station 10 and the terminal 20 that execute processes and operations described so far is described. The base station 10 and the terminal 20 have functions for performing the above embodiments. However, the base station 10 and the terminal 20 each may have only some of the functions in the embodiments.

### <Base station 10>

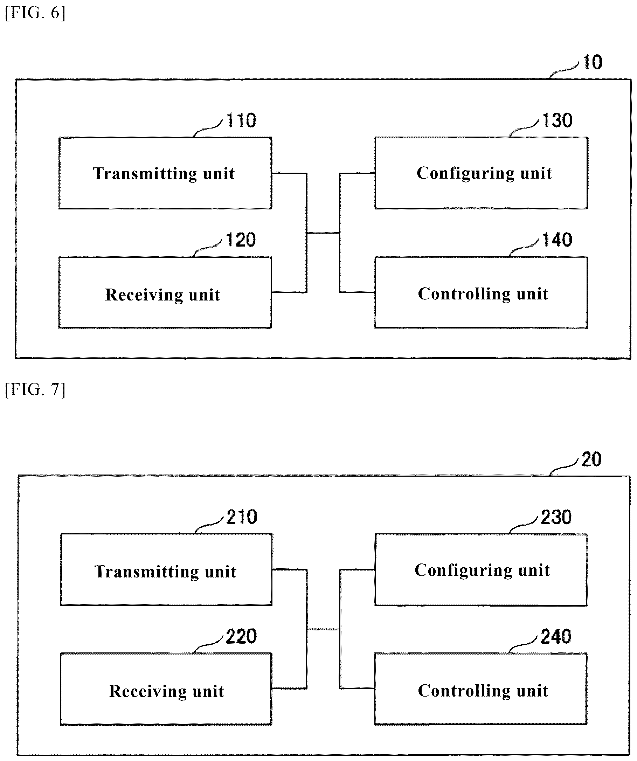

FIG. 6 is a diagram showing an example of a functional configuration of a base station 10 according to an embodiment of the present invention. As shown in FIG. 6, the base station 10 has a transmitting unit 110, a receiving unit 120, a configuring unit 130 and a controlling unit 140. The functional configuration shown in FIG. 6 is only an example. Any functional classification and any functional unit name may be used as long as the operations according to the embodiments of the present invention can be performed.

The transmitting unit 110 has a function of generating a signal to be transmitted to the terminal 20 side and transmitting the signal wirelessly. Further, the transmitting unit 110 transmits a message between network nodes to another network node. The receiving unit 120 has a function of receiving various signals transmitted from the terminal 20 and acquiring information of, for example, a higher layer from the received signals. The transmitting unit 110 also has a function of transmitting NR-PSS, NR-SSS, NR-PBCH, DL/UL control signals and the like to the terminal 20. Further, the receiving unit 120 receives a message between network nodes from another network node.

The configuring unit 130 stores pre-configured configuration information and various configuration information to be transmitted to the terminal 20. Content of the configuration information is, for example, information related to measurement configuration.

The controlling unit 140, as described in the embodiments, controls the measurement configuration. The controlling unit 140 also performs scheduling. The functional unit related to signal transmission in the controlling unit 140 may be included in the transmitting unit 110, and the functional unit related to signal reception in the controlling unit 140 may be included in the receiving unit 120.

### <Terminal 20>

FIG. 7 is a diagram showing an example of a functional configuration of a terminal 20 according to an embodiment of the present invention. As shown in FIG. 7, the terminal 20 has a transmitting unit 210, a receiving unit 220, a configuring unit 230 and a controlling unit 240. The functional configuration shown in FIG. 7 is only an example. Any functional classification and any functional unit name may be used as long as the operations according to the embodiments of the present invention can be performed.

The transmitting unit 210 generates a transmission signal from the transmission data and transmits the transmission signal wirelessly. The receiving unit 220 receives various signals wirelessly and acquires a signal of a higher layer from the received signal of a physical layer. The receiving unit 220 also has a function of receiving NR-PSS, NR-SSS, NR-PBCH, DL/UL/SL control signals and the like transmitted from the base station 10. Further, for example, the transmitting unit 210, as D2D communication, transmits PSCCH (Physical Sidelink Control Channel), PSSCH (Physical Sidelink Shared Channel), PSDCH (Physical Sidelink Discovery Channel), PSBCH (Physical Sidelink Broadcast Channel) and the like to other terminals 20, and the receiving unit 220 receives PSCCH, PSSCH, PSDCH, PSBCH and the like from other terminals 20.

The configuring unit 230 stores various configuration information received from the base station 10 by the receiving unit 220. The configuring unit 230 also stores pre-configured configuration information. Content of the configuration information is, for example, information related to measurement configuration.

The controlling unit 240, as described in the embodiments, controls the measurement configuration. The functional unit related to signal transmission in the controlling unit 240 may be included in the transmitting unit 210, and the functional unit related to signal reception in the controlling unit 240 may be included in the receiving unit 220.

### (Hardware configuration)

Block diagrams (FIG. 6 and FIG. 7) used in the description of the embodiments above show blocks of each function unit. These functional blocks (configuration units) are achieved by any combination of at least one of hardware and software. Further, the method of achieving each functional block is not particularly limited. That is, each functional block may be achieved by using one physically or logically coupled device, by directly or indirectly (for example, in a wired or wireless manner) connecting two or more physically or logically separated devices, and by using these multiple devices. The functional block may be achieved by combining software with the one device above or the plurality of devices above.

The functions include, but are not limited to, judging, deciding, determining, computing, calculating, processing, deriving, investing, searching, confirming, receiving, transmitting, outputting, accessing, resolving, choosing, selecting, establishing, comparing, assuming, expecting, treating, broadcasting, notifying, communicating, forwarding, configuring, reconfiguring, allocating, mapping, assigning, etc. For example, a functional block (configuration unit) that makes transmission function is called a transmitting unit or a transmitter. As described above, neither of these methods is specifically limited.

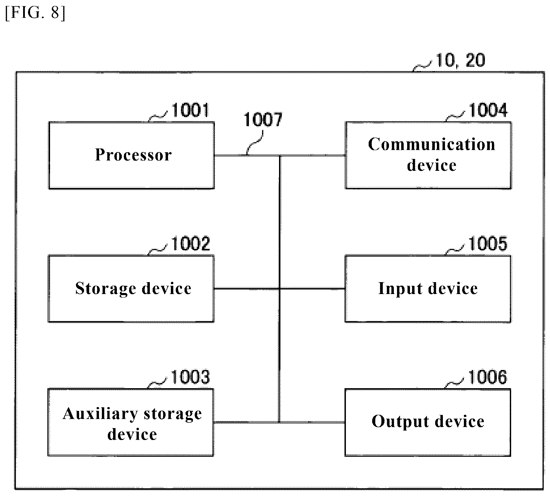

For example, the base station 10, the terminal 20 and the like in one embodiment of the present disclosure may function as a computer that processes the wireless communication methods of the present disclosure. FIG. 8 is a diagram showing an example of a hardware configuration of the base station 10 and the terminal 20 according to an embodiment of the present disclosure. The base station 10 and the terminal 20 above may be physically configured as a computer device including a processor 1001, a storage device 1002, an auxiliary storage device 1003, a communication device 1004, an input device 1005, an output device 1006, a bus 1007 and the like.

In the following description, term "device" can be understood as a circuit, a device, a unit and the like. A hardware configuration of the base station 10 and the terminal 20 may be configured to include one or more of the devices shown in the drawings or may be configured to not include some of the devices.

Each function in the base station 10 and the terminal 20 is achieved by the processor 1001 to perform calculation by loading a predetermined software (a program) on hardware such as the processor 1001 and the storage device 1002, by controlling communication by the communication device 1004, and by controlling at least one of reading and writing data on the storage device 1002 and the auxiliary storage device 1003.

The processor 1001, for example, operates an operating system to control the entire computer. The processor 1001 may be configured by a central processing unit (CPU) including an interface with a peripheral equipment, a control device, an arithmetic device, a register and the like. For example, the controlling unit 140, the controlling unit 240 and the like above may be achieved by the processor 1001.

Further, the processor 1001 reads a program (a program code), a software module, data and the like from at least one of the auxiliary storage device 1003 and the communication device 1004 into the storage device 1002, and performs various processes according to the program, the software module and the data. For the program, a program that causes a computer to perform at least some of the operations described in the above embodiments is used. For example, the controlling unit 140 of the base station 10 shown in FIG. 6 may be included in the storage device 1002 and achieved by a control program operated on the processor 1001. Further, for example, the controlling unit 240 of the terminal 20 shown in FIG. 7 may be included in the storage device 1002 and achieved by a control program operated on the processor 1001. Although it has been described that the various processes described above are performed by one processor 1001, these processes may be performed simultaneously or sequentially by two or more processors 1001. The processor 1001 may be implemented by one or more chips. The program may be transmitted from a network via a telecommunication line.

The storage device 1002 is a computer-readable recording medium, and may be configured by at least one of, for example, ROM (Read Only Memory), EPROM (Erasable Programmable ROM), EEPROM (Electrically Erasable Programmable ROM), and RAM (Random Access Memory) . The storage device 1002 may be called a register, a cache, a main memory (a main storage device) and the like. The storage device 1002 can store a program (a program code), a software module and the like that can be operate to implement a communication method according to one embodiment of the present disclosure.

The auxiliary storage device 1003 is a computer-readable recording medium, and may be configured by at least one of, for example, an optical disk such as a CD-ROM (Compact Disc ROM), a hard disk drive, a flexible disk, an optical magnetic disk (for example, a compact disk, a digital versatile disk, Blue-ray (registered trademark) disk), a smart card, a flash memory (for example, a card, a stick, a key drive), a floppy (registered trademark) disk, and a magnetic strip. The storage medium described above may be, for example, a database, a server or other suitable mediums including at least one of the storage device 1002 and the auxiliary storage device 1003.

The communication device 1004 is hardware (a transmitting/receiving device) for communicating between computers via at least one of a wired network and a wireless network, and is also referred to as, for example, a network device, a network controller, a network card, and a communication module. The communication device 1004 may be configured to include, for example, a high frequency switch, a duplexer, a filter, and a frequency synthesizer in order to achieve at least one of frequency division duplex (FDD) and time division duplex (TDD). For example, a transmitting/receiving antenna, an amplifier unit, a transmitting/receiving unit, a transmission line interface and the like may be achieved by the communication device 1004. The transmission/receiving unit may be implemented in a physically or logically separated manner between the transmitting unit and the receiving unit.

The input device 1005 is an input device (for example, a keyboard, a mouse, a microphone, a switch, a button, and a sensor) that receives input from outside. The output device 1006 is an output device (for example, a display, a speaker, and an LED lamp) that performs output to outside. The input device 1005 and the output device 1006 may have an integrated configuration (for example, a touch panel).

Further, each device such as the processor 1001 and the storage device 1002 is connected by a bus 1007 for communicating information. The bus 1007 may be configured by using a single bus, or may be configured by using a different bus for each device.

Further, the base station 10 and the terminal 20 may be configured to include hardware such as a microprocessor, a digital signal processor (DSP), an application specific integrated circuit (ASIC), a programmable logic device (PLD), a field programmable gate array (FPGA) and the like, and some or all of the functional blocks may be achieved by the hardware. For example, the processor 1001 may be implemented using at least one of these hardware.

### (Summary of embodiments)

As described above, according to the embodiments of the present invention, provided is a terminal having a receiving unit that performs measurements at a layer 1 and a layer 3 with reference to one or more first symbols, and a controlling unit that assumes no data scheduling done between the first symbol, a second symbol continuous before the first symbol and a third symbol continuous after the first symbol, wherein a number of symbols of the second symbol is greater than or equal to 1 and a number of symbols of the third symbol is greater than or equal to 1.

According to the above configurations, the base station 10 and the terminal 20 can flexibly set a symbol that is not used for data scheduling according to a frequency band, SCS and the like when measuring SSB or various reference signals. Therefore, in a wireless communication system, scheduling adapted to a frequency band can be performed.

A number of symbols of the second symbol and a number of symbols of the third symbol may be determined based on the frequency band or the subcarrier interval. With the configuration, the terminal 20 can flexibly set a symbol that is not used for data scheduling according to a frequency band, SCS and the like when measuring SSB or various reference signals.

A number of symbols of the second symbol and a number of symbols of the third symbol may be determined based on a beam switching time and a transmission/reception switching time. With the configuration, the terminal 20 can secure the time required for transition between measurement and data reception.

A number of symbols of the second symbol and a number of symbols of the third symbol may be larger when the measurement is performed at layer 3 than when the measurement is performed at layer 1. With the configuration, the terminal 20 can adjust the time required for transition between measurement and data reception according to the measurement content.

Further, according to one embodiment of the present invention, provided is a base station having a transmitting unit that transmits one or more first symbols referred during measurement on a layer 1 and a layer 3, and a controlling unit that does not perform data scheduling between the first symbol, a second symbol continuous before the first symbol and a third symbol continuous after the first symbol, wherein a number of symbols of the second symbol is greater than or equal to 1 and a number of symbols of the third symbol is greater than or equal to 1.

According to the above configurations, the base station 10 and the terminal 20 can flexibly set a symbol that is not used for data scheduling according to a frequency band, SCS and the like when measuring SSB or various reference signals. Therefore, in a wireless communication system, scheduling adapted to a frequency band can be performed.

Further, according to the embodiments of the present invention, provided is a communication method comprising a reception step for performing measurements at a layer 1 and a layer 3 with reference to one or more first symbols, and a control step for assuming no data scheduling done between the first symbol, a second symbol continuous before the first symbol and a third symbol continuous after the first symbol by a terminal, wherein a number of symbols of the second symbol is greater than or equal to 1 and a number of symbols of the third symbol is greater than or equal to 1.

According to the above configurations, the base station 10 and the terminal 20 can flexibly set a symbol that is not used for data scheduling according to a frequency band, SCS and the like when measuring SSB or various reference signals. Therefore, in a wireless communication system, scheduling adapted to a frequency band can be performed.

### (Supplement to embodiments)

Although the embodiments of the present invention have been described above, the disclosed inventions are not limited to such embodiments, and those skilled in the art will understand various modifications, corrections, alternatives, substitutions and the like. Although explanations have been given using specific numerical examples in order to promote understanding of the present invention, these numerical values are merely examples and any appropriate values may be used unless otherwise specified. Classification of items in the above description is not essential to the present invention, and elements described in two or more items may be used in combination as necessary, and an element described in one item may be applied to another element (as long as there is no contradiction) described in other items. A boundary of the functional unit or the processing unit in the functional block diagram does not necessarily correspond to a boundary of the physical components. Operations of the plurality of functional units may be physically performed by one component, or operations of one functional unit may be physically performed by a plurality of components. For the processing procedure described in the embodiments, the processing order may be changed as long as there is no contradiction. For convenience of description of processing, although the base station 10 and the terminal 20 have been described with reference to functional block diagrams, such devices may be implemented in hardware, software, or a combination thereof. Software operated by a processor of the base station 10 according to the embodiment of the present invention and software operated by a processor of the terminal 20 according to the embodiment of the present invention respectively may be stored in a random access memory (RAM), a flash memory, a read-only memory (ROM), EPROM, EEPROM, a register, a hard disk (HDD), a removable disk, CD-ROM, a database, a server or any other suitable storage medium.

Further, the notification of information is not limited to the aspects/embodiments described in the present disclosure, and may be performed by using other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, notification information (MIB (Master Information Block)), SIB (System Information Block)), other signals or a combination thereof. Further, RRC signaling may be called an RRC message and may be, for example, an RRC connection setup message, and an RRC connection reconfiguration message.

Each aspect/embodiment described in the present disclosure may be applied at least one of LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), a system using other suitable systems, and a next generation system expanded based on these. Further, a plurality of systems may be applied in a combination (for example, a combination of at least one of LTE and LTE-A and 5G).

The order of processing procedures, sequences, flowcharts, etc. of each aspect/embodiment described in the present specification may be changed as long as there is no contradiction. For example, the methods described in the present disclosure present elements of various steps using exemplary orders, and are not limited to the particular order presented.

The specific operation performed by the base station 10 in the present specification may be performed by its upper node in some cases. In a network consisting of one or more network nodes having the base station 10, it is obvious that various operations performed for communication with the terminal 20 are performed by the base station 10 and at least one of other network nodes (for example, MME, and S-GW, but not limited to these) other than the base station 10. In the above example, a case where there is one network node other than the base station 10 is illustrated, but other network nodes may be a combination of a plurality of the other network nodes (for example, MME and S-GW).

The information, signals, etc. described in the present disclosure may be output from an upper layer (or a lower layer) to a lower layer (or an upper layer). Input/output may be performed via a plurality of network nodes.

The input/output information and the like may be stored in a specific place (for example, a memory) or may be managed using a management table. Information to be input/output may be overwritten, updated or added. The output information and the like may be deleted. The input information and the like may be transmitted to the other device.

Determination in the present disclosure may be performed by a value represented by 1 bit (0 or 1), may be performed by a true/false value (Boolean: true or false), or may be performed by comparison of numerical values (for example, comparison with a predetermined value).

Software, whether called software, firmware, middleware, microcode, hardware description language, or other names, should be broadly interpreted to mean an instruction, an instruction set, a code, a code segment, a program code, a program, a subprogram, a software module, an application, a software application, a software package, a routine, a subroutine, an object, an executable file, an execution thread, a procedure, a feature and the like.

Further, software, an instruction, information and the like may be transmitted and received via a transmission medium. For example, if software uses at least one of wired technology (coaxial cable, optical fiber cable, twisted pair, digital subscriber line (DSL), etc.) and wireless technology (infrared, microwave, etc.) and is transmitted from a website, a server or other remote sources, at least one of these wired and wireless technologies is included within the definition of a transmission medium.

The information, signal, etc. described in the present disclosure may be represented using any of a variety of different technologies. For example, the data, the instruction, the commands, the information, the signal, the bit, the symbol, the chip, etc. may be represented by voltage, current, electromagnetic waves, magnetic field or magnetic particle, light field or photon, or any combination of these.

The terms described in the present disclosure and the terms necessary for understanding the present disclosure may be replaced with terms having the same or similar meanings. For example, at least one of the channel and the symbol may be a signal (signaling). The signal may also be a message. Further, the component carrier (CC) may be called a carrier frequency, a cell, a frequency carrier and the like.

The terms "system" and "network" used in the present disclosure are used interchangeably.

Further, the information, parameters, etc. described in the present disclosure may be represented using an absolute value, may be represented by a relative value from a predetermined value, or may be represented by other corresponding information. For example, a radio resource may be indicated by an index.

The names used for the parameters mentioned above should not be limited in any respect. Further, mathematical formulas and the like using these parameters may differ from those explicitly disclosed in the present disclosure. Since various channels (for example, PUCCH, and PDCCH) and information elements can be identified by any suitable names, various names assigned to these various channels and information elements should net be limited in any respect.

In the present disclosure, the terms "base station (BS)", "wireless base station", "base station device", "fixed station", "NodeB", "eNodeB (eNB)", "gNodeB (gNB)", "access point", "transmission point", "reception point", "transmission/reception point", "cell", "sector", "cell group", "carrier", "component carrier", etc. may be used interchangeably. The base station may be called by terms such as macrocell, small cell, femtocell and picocell.

The base station can accommodate one or more (for example, three) cells. When the base station accommodates a plurality of cells, the entire base station coverage area can be divided into a plurality of smaller areas, and each of the smaller areas can provide communication service by a base station subsystem (for example, a small indoor base station (RRH: Remote Radio Head)). The term "cell" or "sector" refers to a part or the whole of at least one of the coverage area of the base station and the base station subsystem that provides communication service in this coverage.

In the present disclosure, the terms "mobile station (MS)", "user terminal", "user equipment (UE)", "terminal", etc. may be used interchangeably.

The mobile station may be called by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be called a transmission device, a reception device, a communication device and the like. At least one of the base station and the mobile station may be a device mounted on a movable body, a movable body itself and the like. The movable body may be a vehicle (for example, a car, and an airplane), may be an unmanned movable body (for example, a drone, and a self-driving car), or may be a robot (manned or unmanned) . It should be noted that at least one of the base station and the mobile station includes a device that does not necessarily move during communication operation. For example, at least one of the base station and the mobile station may be IoT (Internet of Things) equipment such as a sensor.

Further, the base station in the present disclosure may be replaced by a user terminal. For example, each aspect/embodiment of the present disclosure may be applied to a configuration replaced by communication between a plurality of terminals 20 (for example, called D2D (Device-to-Device), and V2X (Vehicle-to-Everything)) for communication between the base station and the user terminal. In this case, the terminal 20 may have the function of the base station 10 described above. In addition, terms such as "upstream" and "downstream" may be replaced by terms corresponding to communication between terminals (for example, "side"). For example, an upstream channel, a downstream channel and the like may be replaced by a side channel.

Similarly, the user terminal in the present disclosure may be replaced by a base station. In this case, the base station may have the function of the user terminal described above.

A term "determining" used in the present disclosure may include a wide variety of operations. "Determining" may include "determining" judging, calculating, computing, processing, deriving, investigating, looking up, search, inquiry (for example, searching in a table, a database or another data structure) and ascertaining. "Determining" may include "determining" receiving (for example, receiving information), transmitting (for example, transmitting information), input, output and accessing (for example, accessing data in a memory). Further, "determining" may include "determining" resolving, selecting, choosing, establishing, comparing, etc. That is, "determining" may include "determining" a certain operation. Further, "determining" may be replaced by "assuming", "expecting", "considering" and the like.

Terms "connected" and "coupled" or any variation thereof refer to any direct or indirect connection or coupling between two or more elements and may include the presence of one or more intermediate elements between the two "connected" or "coupled" elements each other. Connection or coupling between the elements may be physical, logical, or a combination thereof. For example, "connection" may be replaced by "access". As used in the present disclosure, the two elements use at least one of one or more wires, cables and printed electrical connections, and as some non-limiting and non-comprehensive examples, and are considered to be "connected" or "coupled" to each other using electromagnetic energy having wavelengths in a radio frequency domain, a microwave domain and a light (both visible and invisible) domain.

The reference signal may be abbreviated as RS and may be called a pilot according to the applied standard.

"Based on" as used in the present disclosure does not mean "based only on" unless otherwise stated. In other words, the phrase "based on" means both "based only on" and "based at least on".

Any reference to the elements using designations such as "first", "second" and so on as used in the present disclosure does not generally limit the quantity or order of those elements. These designations may be used in the present disclosure as a convenient method to distinguish between two or more elements. Therefore, references to the first and second elements do not mean that only two elements can be adopted, or that the first element must somehow precede the second element.

The "means" in the configuration of each of the above devices may be replaced by a "part", a "circuit", a "device" and the like.

When "include", "including" and variations thereof are used in the present disclosure, these terms are intended to be inclusive as a term "comprising". Further, the term "or" used in the present disclosure is intended not to be exclusive.

A radio frame may be configured by one or more frames in a time domain. Each frame of the one or more frames in the time domain may be called a subframe. The subframe may further be configured by one or more slots in the time domain. The subframe may be a fixed time length (for example, 1 ms) that does not depend on numerology.

The numerology may be a communication parameter that applies to at least one of transmission and reception of a signal or a channel. The numerology may indicate at least one of, for example, a subcarrier spacing (SCS), a bandwidth, a symbol length, a cyclic prefix length, a transmission time interval (TTI), a number of symbols per TTI, a wireless frame configuration, a specific windowing process performed by a transmitter/receiver to perform in a frequency domain, and a specific window wink process for the transmitter/receiver to perform in a time domain.

The slot may be configured by one or more symbols (OFDM (Orthogonal Frequency Division Multiplexing) symbol, and SC-FDMA (Single Carrier Frequency Division Multiple Access) symbol, etc.) in the time domain. The slot may be in time units based on numerology.

The slot may include a plurality of mini slots. Each mini slot may be configured by one or more symbols in the time domain. Further, the mini slot may be called a sub slot. The mini slot may be configured by a smaller number of symbols than the slots. PDSCH (or PUSCH) transmitted in the time unit larger than the mini slot may be called PDSCH (or PUSCH) mapping type A. PDSCH (or PUSCH) transmitted using the mini slot may be called PDSCH (or PUSCH) mapping type B.

The radio frame, the subframe, the slot, the mini slot and the symbol all represent in the time unit for transmitting a signal. For the radio frame, the subframe, the slot, the mini slot and the symbol, correspondingly different names may be used.

For example, one subframe may be called a transmission time interval (TTI), a plurality of consecutive subframes may be called TTI, and one slot or one mini slot may be called TTI. That is, at least one of the subframe and TTI may be a subframe (1 ms) in existing LTE, may be a period shorter than 1 ms (for example, 1-13 symbols), or may be a period longer than 1 ms. The unit representing TTI may be called a slot, a mini slot and the like instead of the subframe.

Here, TTI refers to, for example, the minimum time unit of scheduling in wireless communication. For example, in the LTE system, the base station schedules each terminal 20 to allocate a wireless resource (a frequency bandwidth that can be used in each terminal 20, transmission power, etc.) in a TTI unit. The definition of TTI is not limited to this.

TTI may be a transmission time unit such as a channel-encoded data packet (transport block), a code block, a code word and the like, and may be a processing unit such as scheduling, link adaptation and the like. When TTI is given, the time interval (for example, a number of symbols) to which the transport block, the code block, the code word, etc. is actually mapped may be shorter than the corresponding TTI.

When one slot or one mini slot is called TTI, one or more TTI (that is, one or more slots or one or more mini slots) may be the minimum time unit for scheduling. Further, a number of slots (a number of mini slots) configuring the minimum time unit of the corresponding scheduling may be controlled.

TTI having a time length of 1 ms may be called a usual TTI (TTI in LTE, Rel. 8-12), a normal TTI, a long TTI, a usual subframe, a normal subframe, a long subframe, a slot and the like. A TTI shorter than the normal TTI may be called a shortened TTI, a short TTI, a partial TTI (a partial or fractional TTI), a shortened subframe, a short subframe, a mini slot, a subslot, a slot and the like.

The long TTI (for example, a usual TTI and a subframe) may be replaced by a TTI having a time length of more than 1 ms, and the short TTI (for example, a shortened TTI) may be replaced by a TTI having a TTI length less than the TTI length of the long TTI and of 1 ms or more.

The resource block (RB) is a resource allocation unit in the time domain and the frequency domain and may include one or more continuous subcarriers in the frequency domain. A number of subcarriers included in RB may be the same regardless of numerology, for example, it may be 12. A number of subcarriers included in RB may be determined based on numerology.

The time domain of RB may also include one or more symbols and may be a length of one slot, one mini slot, one subframe, or one TTI. Each of one TTI, one subframe, etc. may be configured by one or more resource blocks.

One or more RBs may be called a physical resource block (PRB: Physical RB), a sub-carrier group (SCG), a resource element group (REG), a PRB pair, an RB pair and the like.

Further, the resource block may be configured by one or more resource elements (REs). For example, one RE may be a wireless resource domain of one subcarrier and one symbol.

A bandwidth part (BWP) (which may also be called a partial bandwidth) may represent a subset of consecutive common RB (common resource blocks) for a certain neurology in a certain carrier. Here, the common RB may be specified by an index of RB with respect to a common reference point of the carrier. PRB may be defined in a certain BWP and may be numbered within the corresponding BWP.

The BWPs may include a BWP for UL (UL BWP) and a BWP for DL (DL BWP). One or more BWPs may be set in one carrier for UE.

At least one of the set BWP may be active and UE may not be assumed to transmit/receive a predetermined signal/channel outside the active BWP. Further, the "cell", "carrier", etc. in the present disclosure may be replaced by "BWP".

The configurations of the radio frame, the subframe, the slot, the mini slot, the symbol and the like described above are merely examples. For example, configurations such as a number of subframes included in the radio frame, a number of slots per subframe or radio frame, a number of mini slots included in the slot, a number of symbols and RBs included in the slot or the mini slot, a number of subcarriers included in RB, a number of symbols in TTI, the symbol length, the cyclic prefix (CP) length can be changed in various ways.

In the present disclosure, if an article is added by translation, for example, a, an and the in English, the present disclosure may include plural nouns following these articles.

In the present disclosure, a term "A and B are different" may mean "A and B are different from each other". The term may also mean "A and B are different from C". Terms such as "separate", "combine" and the like may be interpreted in the same way as "be different".

Each aspect/embodiment described in the present disclosure may be used alone, may be used in combination, or may be used by switching according to performance. Further, a notification of predetermined information (for example, a notification of "being X") is not limited to an explicit one, and may be performed implicitly (for example, the notification of the predetermined information is not performed).

A reference symbol in the present disclosure is an example of a first symbol.

Although the present disclosure has been described in detail above, it is clear to those skilled in the art that the present disclosure is not limited to the embodiments described in the present disclosure. The present disclosure may be implemented as amendment and modification aspects without departing from the spirit and scope of the present disclosure, which are determined by the description of the scope of claims. Therefore, description of the present disclosure is for purposes of illustration and does not have any limiting meaning to the present disclosure.

### [Explanation of Reference Numerals]

10 Base station
110 Transmitting unit
120 Receiving unit
130 Configuring unit
140 Controlling unit
20 Terminal
210 Transmitting unit
220 Receiving unit
230 Configuring unit
240 Controlling unit
1001 Processor
1002 Storage device
1003 Auxiliary storage device
1004 Communication device
1005 Input device
1006 Output device

## Claims

1. A terminal, comprising: a receiving unit that performs measurement in a layer 1 and a layer 3 with reference to one or more first symbols, and
a controlling unit that assumes no data scheduling done in the first symbol, a second symbol continuous before the first symbol and a third symbol continuous after the first symbol,
wherein a number of symbols of the second symbol is greater than or equal to 1 and a number of symbols of the third symbol is greater than or equal to 1.

2. The terminal according to claim 1, wherein the number of symbols of the second symbol and the number of symbols of the third symbol are determined based on a frequency band or a subcarrier spacing.

3. The terminal according to claim 1, wherein the number of symbols of the second symbol and the number of symbols of the third symbol are determined based on a beam switching time and a transmission/reception switching time.

4. The terminal according to claim 1, wherein the number of symbols of the second symbol and the number of symbols of the third symbol are larger when the measurement is performed at the layer 3 than when the measurement is performed at the layer 1.

5. A base station, comprising: a transmitting unit that transmits one or more first symbols referenced during measurement in a layer 1 and a layer 3, and
a controlling unit that does not perform data scheduling for the first symbol, a second symbol continuous before the first symbol and a third symbol continuous after the first symbol,
wherein a number of symbols of the second symbol is greater than or equal to 1 and a number of symbols of the third symbol is greater than or equal to 1.

6. A communication method, comprising: a reception step for performing measurement in a layer 1 and a layer 3 with reference to one or a plurality of first symbols, and
a control step for assuming no data scheduling done for the first symbol, a second symbol continuous before the first symbol and a third symbol continuous after the first symbol by a terminal,
wherein a number of symbols of the second symbol is greater than or equal to 1 and a number of symbols of the third symbol is greater than or equal to 1.
